Europäisches Patentamt

European Patent Office

Office européen des brevets

(19)

(11) **EP 0 716 001 B1**

(12) **FASCICULE DE BREVET EUROPEEN**

(45) Date de publication et mention
de la délivrance du brevet:
**03.05.2000 Bulletin 2000/18**

(51) Int Cl.[7]: **B60T 8/00**

(21) Numéro de dépôt: **95402703.3**

(22) Date de dépôt: **30.11.1995**

(54) **Procédé de protection contre l'enrayage patinage lors de la mesure du déplacement d'un véhicule**

Verfahren zum Schutz gegen Antriebsschleudern während der Messung der Fortbewegung eines Fahrzeugs

Method for protection against skidding during measurement of the deplacement of a vehicle

(84) Etats contractants désignés:
**AT BE CH DE DK ES GB GR IE IT LI NL PT SE**

(30) Priorité: **05.12.1994 FR 9414580**

(43) Date de publication de la demande:
**12.06.1996 Bulletin 1996/24**

(73) Titulaire: **GEC ALSTHOM TRANSPORT SA**
**75016 Paris (FR)**

(72) Inventeur: **Chapront, Pierre**
**F-95160 Montmorency (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
**DE-A- 1 905 553      DE-A- 2 422 147**
**DE-A- 2 930 378      DE-A- 3 127 033**
**DE-A- 4 217 090      FR-A- 2 119 976**

• **Bosch Technische Berichte 7 (1980), Leiber et al**
**"Antiblockiersysteme (ABS) für**
**Personenkraftwagen" pages 72,78&79**

## Description

La présente invention concerne les procédés de protection contre l'enrayage patinage lors de la mesure du déplacement d'un véhicule, notamment ferroviaires.

Pour rappel, le bilan des actions et réactions sur un essieu en phase de freinage est le suivant:

$$R_e = F_e \pm \frac{I}{r^2}\frac{dV}{dt}$$

où

$R_e$    est la réaction du rail sur l'essieu,
$F_e$    est l'effort de freinage à la jante engendré par les véhicules utilisant l'adhérence roue/rail,
I    est le moment d'inertie polaire de l'essieu,
r    est le rayon de la roue, et
V    est la vitesse circonférentielle de la roue.

Au moment de la décélération de l'essieu, la réaction $R_e$ du rail sur l'essieu est donnée par l'une ou l'autre des expressions suivantes:

$$R_e = F_e - \frac{I}{r^2}\frac{dV}{dt} = F_e - \frac{I}{r^2}\gamma$$

avec $\gamma > 0$.

Au moment de l'accélération de l'essieu, après glissement des roues, la réaction $R_e$ du rail sur l'essieu est donnée par l'une ou l'autre des expressions suivantes:

$$R_e = F_e + \frac{I}{r^2}\frac{dV}{dt} = F_e + \frac{I}{r^2}\gamma$$

D'autre part, l'équation de la dynamique pour le véhicule est:

$$(M+m)\gamma = F + R_a$$

où

M    est la masse sur rails du véhicule,
m    est la somme des $I/r^2$ pour le véhicule,
F    est la somme des $F_e$ pour le véhicule, et
$R_a$    est la résistance à l'avancement du véhicule.

L'adhérence $\tau$ disponible entre roue et rail est donnée par l'expression:

$$\tau = \frac{F_{max}}{P}$$

où

$F_{max}$    est la valeur maximale de Fe que l'on peut exercer sans que l'essieu ne glisse.

Un véhicule freiné par un effort F décélère en sollicitant une adhérence donnée par l'expression:

$$\tau_s = \frac{R}{P}$$

où

R   est la réaction du rail pour le véhicule correspondant à F et en négligeant les effets de cabrage.

or R étant donnée par l'une ou l'autre des expressions suivantes:

$$R = \sum (R_e) = \sum (F_e) - \sum (\frac{I}{r^2}\frac{dV}{dt}) = F - m\gamma$$

soit:

$$R = M\gamma - R_a$$

donc:

$$\tau_s = \frac{M.\gamma - R_a}{M.g}$$

et

$$\tau_s = \frac{M\frac{R_a + F}{M+m} - R_a}{M.g}$$

donc:

$$\tau_s = \frac{F - \frac{m}{m}R_a}{(M+m)g}$$

Remarques:

-   si on conserve $\gamma$ dans les formules, on obtient:

$$\tau_s = \frac{\gamma}{g} - \frac{R_a}{M.g}$$

-   si on néglige la résistance à l'avancement, ce qui est le cas général, on obtient:

$$\tau_s = \frac{F}{(M+m)g} = \frac{\gamma}{g}$$

ce qui représente les définitions usuelles de l'adhérence sollicitée.

A ce stade, la définition de la variable $\nu$ appelée glissement relatif de la roue sur le rail est donnée par l'une ou l'autre des expressions suivantes:

$$\nu = \frac{W}{V_t} = \frac{V_t\text{-}V}{V_t} = \frac{Vitesse\ .du.véhicule\text{-}Vitesse.de.la.roue}{Vitesse.du.véhicule}$$

où

W   est le glissement absolu de la roue sur le rail.

L'expérimentation, ainsi que les études théoriques, ont permis de montrer que la courbe, $\tau_s=f(\nu)$, de l'adhérence sollicitée en fonction du glissement relatif de la roue sur le rail, comporte deux parties:

- la première partie, dite zone de micro-glissement, ou des pseudo-glissements, décrit l'évolution de l'adhérence disponible pour des glissements roue/rail inférieures à 1%,
- la seconde partie, dite zone de macro-glissements ou zone de forts glissements, décrit l'évolution de l'adhérence pour des glissements roue/rail supérieurs à 1% et allant jusqu'à l'enrayage.

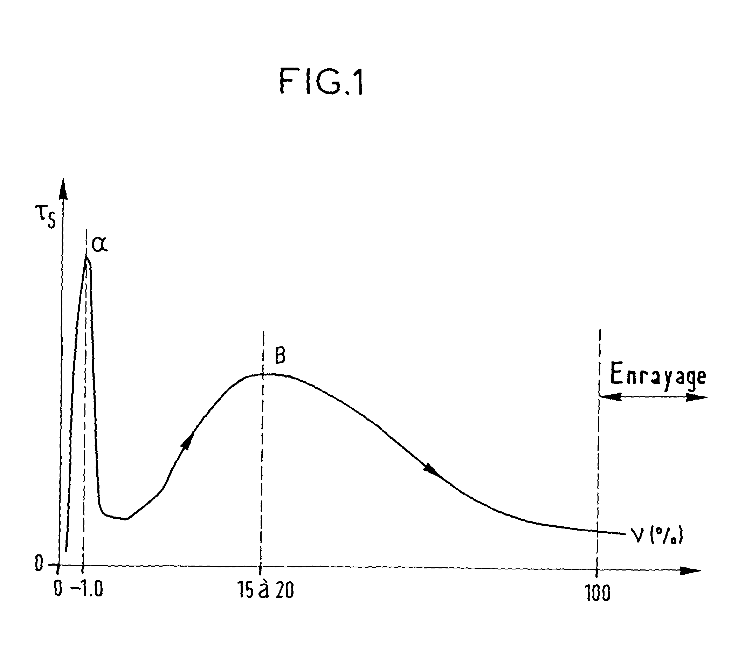

Une telle courbe $\tau_s=f(\nu)$, de l'adhérence sollicitée en fonction du glissement relatif de la roue sur le rail, est représentée à la figure 1.

La zone de micro-glissements est située à la pointe de la courbe et est notée $\alpha$ sur la figure 1.

L'étude théorique et quelques enregistrements de freinages montrent qu'au moment de l'établissement de l'effort de freinage, l'adhérence passe par un maximum.

Ce point maximum $\alpha$ est atteint pour des glissements très faibles, de l'ordre de 1%.

L'adhérence disponible chute ensuite très rapidement lorsque le glissement augmente, et suivant la loi naturelle de décroissance de l'adhérence.

Les glissements constatés ne sont que des pseudo-glissements ne mettant pas en jeu les élasticités de la roue et du rail à l'intérieur de l'ellipse de contact.

La zone de macro-glissements est située sur un point maximum de la courbe situé après la pointe $\alpha$ définie précédemment et est notée B sur la figure 1.

Lorsque la pointe $\alpha$ est dépassée, et donc lorsque l'on sort de la zone des micro-déplacements, on entre dans une zone naturellement instable. On ne peut trouver une zone de fonctionnement stable qu'à l'aide des dispositifs anti-enrayeur. Ceux-ci agissent sur l'effort à la jante de manière à obtenir un glissement sensiblement constant dit macro-glissement.

La forme générale de la courbe adhérence/glissement $\tau_s=f(\nu)$ a pu être mise en évidence de manière répétitive au cours d'essais.

On constate que si on arrive à diminuer assez vite l'effort à la jante, puis à la réappliquer progressivement, on peut obtenir une reprise d'adhérence se traduisant par un sommet sur la courbe $\tau_s=f(\nu)$ représenté par le point B.

La position, abscisse et ordonnée, du point B dépend étroitement de la décélération de mise en glissement de l'essieu: l'ordonnée du point B est d'autant plus élevée que la décélération de mise en glissement est faible.

Ainsi, une forte décélération peut même aboutir à une non apparition du point B: seul un dispositif anti-enrayeur peut permettre de maintenir la décélération sous un certain seuil et favoriser l'apparition du point B.

En fait, lorsque l'essieu part en glissement naturellement, ce glissement se fait généralement avec une décélération de mise en glissement $\gamma$ élevée et suit alors la décroissance naturelle de l'adhérence jusqu'à l'enrayage.

On constate que plus la charge à l'essieu est élevée, moins l'adhérence aux points B est élevés, à glissement au point B donné.

De plus, lorsque l'adhérence disponible dépasse 10%, le point B se confond avec le point $\alpha$, ce qui correspond en fait au freinage dit sur rail sec où seuls interviennent les phénomènes de pseudo-glissements.

Enfin, l'allure de la courbe adhérence-glissement dépend beaucoup de la vitesse avec laquelle elle est parcourue, c'est à dire du temps cumulé de glissement depuis le début du freinage et donc de la décélération de mise en glissement.

En pratique, la position du point B, en fonctionnement normal des anti-enrayeurs correspond à des glissements compris entre 15% et 20%.

Dans le cadre des systèmes d'aide à la conduite, à l'exploitation et à la maintenance, il est connu d'utiliser une roue codée de manière à permettre de s'affranchir de tous les défauts d'origine électrique.

Ces solutions, de l'état de la technique, ont pour inconvénients de présenter des défauts d'ordre mécanique.

Ces défauts mécaniques se décomposent en:

- la rupture d'axe ou le blocage permanent de l'essieu, défaut détecté au moyen d'une information utilisée en tout ou rien et prise sur un autre essieu,

- l'enrayage ou le patinage, liés à une perte temporaire d'adhérence, laquelle se traduit par une vitesse de rotation de la roue quasiment indépendante de celle du véhicule,
- le glissement, qui correspond à une vitesse de la roue différente de celle du train mais est liée à celle-ci dans un rapport pratiquement constant.

Le document Bosch Technische Berichte 7 (1980), Leiber et al "Antiblockiersysteme (ABS) für Personenkraftwagen", page 72, chapitre 5.2 et page 78, chapitre 7.1 à page 79, chapitre 7.2, décrit un procédé antiblocage pour véhicules automobiles faisant appel à la mesure du déplacement du véhicule dont la décéleration des roues est comparée à différents seuils fixes définissant des transitions d'un automate à états finis, reflétant la situation des mouvements des roues.

Aussi un but de l'invention est-il un procédé de protection contre l'enrayage patinage lors de la mesure du déplacement d'un véhicule, ne présentant pas les inconvénients cités ci-dessus des dispositifs et procédés de l'art antérieur.

Un autre but de l'invention est un procédé de protection contre l'enrayage patinage lors de la mesure du déplacement d'un véhicule permettant une plus grande sécurité.

Un autre but de l'invention est un procédé de protection contre l'enrayage patinage lors de la mesure du déplacement d'un véhicule permettant de maintenir les niveaux de performance et de disponibilité.

L'invention a pour objet un procédé de protection contre l'enrayage patinage lors de la mesure du déplacement d'un véhicule tel que les changements de valeurs de l'accélération définissent les transitions d'un automate à états finis reflétant la situation des mouvements d'une roue du véhicule, caractérisé en ce qu'il comprend les étapes suivantes:

- une première étape consiste à détecter le début du freinage du véhicule, $\gamma_{instantané} < 0$,
- une deuxième étape consiste à détecter le début du glissement du véhicule,
- une troisième étape consiste à majorer le glissement d'une valeur forfaitaire, par exemple de 15%, et à contrôler que le glissement se stabilise, et
- une quatrième étape consiste à détecter l'enrayage du véhicule pour $\gamma_{instantané} < -X\ m/s^2$, X étant une valeur prédéfinie pour laquelle la mesure du déplacement du véhicule ne sera plus utilisée.

Le procédé de l'invention satisfait à l'une des caractéristiques suivantes:

- le début du glissement du véhicule est effectif lorsque $\gamma_{instantané} < -2m/s^2$,
- la valeur forfaitaire de la majoration du glissement est de 15%,
- le glissement est stabilisé lorsque $-2m/s^2 < \gamma_{instantané} < -1,5m/s^2$,
- X a pour valeur prédéfinie $5m/s^2$.

Un avantage du procédé de protection contre l'enrayage patinage lors de la mesure du déplacement des véhicules est de garantir la sécurité de la mesure.

D'autres buts, caractéristiques et avantages de l'invention apparaîtront à la lecture de la description du procédé de protection contre l'enrayage patinage lors de la mesure du déplacement d'un véhicule, description faite en liaison avec les dessins dans lesquels:

- la figure 1 représente la courbe $\tau_s = f(v)$, de l'adhérence sollicitée en fonction du glissement relatif de la roue sur le rail, et
- la figure 2 représente un algorithme d'un automate à états finis permettant la mise en oeuvre du procédé de protection contre l'enrayage patinage lors de la mesure du déplacement des véhicules, selon l'invention.

Le procédé de protection contre l'enrayage patinage lors de la mesure du déplacement des véhicules de l'invention, repose sur les propriétés physiques décrites précédemment.

Pour les applications du type métro et banlieue, la vitesse maximale est inférieure à 140km/h et plus souvent inférieure à 100km/h. On se trouve donc dans la zone d'adhérence maximale. La valeur de l'adhérence est inférieure à 0,2 pour un véhicule vide.

La constatation que la décéleration de l'essieu est supérieure à 0,2g permet la détection d'un début de glissement.

Cette mesure d'accélération peut se faire sur un cycle de 0,2s, car le fonctionnement des anti-enrayeurs exige des temps de réponse plus faibles que la durée du cycle.

Dès lors qu'un début de glissement a été constaté, si on constate également que la valeur d'accélération est très grande, on en déduit que l'enrayage va avoir lieu. On considère alors qu'on ne peut plus utiliser la mesure.

Si les anti-enrayeurs fonctionnent, ils vont stabiliser le glissement et dès lors, la décélération va devenir inférieure à 2m/s$^2$ en moyenne. Des oscillations rapides peuvent exister, mais la moyenne sur plusieurs cycles doit être notablement inférieure à 2m/s$^2$.

Une condition de contrôle de la stabilisation est que, en quelque cycles, la décélération moyenne soit tombée en dessous de 1,5m/s$^2$.

Pendant la période transitoire avant stabilisation, on doit extrapoler la mesure de déplacement en la majorant et simultanément vérifier que le glissement n'a pas pu se stabiliser à plus d'une valeur supérieure à celle compatible avec la majoration utilisée, par exemple on prendra une valeur de majoration de 15%.

Si l'on suppose que le véhicule ralenti à la décélération maximale de 2m/s$^2$, il faudra au véhicule un temps $T_c$ pour que sa vitesse initiale soit réduite de 15%;

Si l'accélération n'est pas stabilisée au bout de ce délai, il est vraisemblable que le glissement a pu dépasser la valeur de 15%. On considère alors que l'information mesurée est inutilisable.

Si l'accélération est stabilisée avant le délai $T_c$ et si l'écart de vitesse mesurée après stabilisation, est inférieure à 15%, on peut considérer que le glissement restera majoré à cette valeur.

La première correction consiste à maintenir, dès le début du ralentissement, la vitesse à la valeur précédant immédiatement ce ralentissement, jusqu'à ce que la vitesse mesurée soit de 15% plus faible.

Ensuite, on utilise la mesure majorée de 15% à condition que l'accélération soit stabilisée.

Pendant le transitoire de durée inférieure à $T_c$ pendant lequel le glissement n'est pas stabilisé, on maintient l'accélération du véhicule à la valeur qu'elle avait avant l'entrée en enrayage.

Cette valeur est soit 0 si l'enrayage commence avec le ralentissement, soit le $\gamma$ mesuré en cours de ralentissement si l'enrayage survient pendant celui-ci.

Le procédé de protection contre l'enrayage patinage lors de la mesure du déplacement d'un véhicule de l'invention est tel que les changements de valeurs d'accélération définissent les transitions d'un automate à états finis reflétant la situation des mouvements d'une roue du véhicule.

Le procédé de protection contre l'enrayage patinage lors de la mesure du déplacement d'un véhicule de l'invention comporte les étapes principales suivantes:

- la première étape consiste à détecter le début du freinage du véhicule, $\gamma_{instantané}<0$,
- la deuxième étape consiste à détecter le début du glissement du véhicule, par exemple $\gamma_{instantané}<-2m/s^2$,
- la troisième étape consiste à majorer le glissement d'une valeur forfaitaire, par exemple de 15%, et à contrôler que le glissement se stabilise, par exemple $-2m/s^2<\gamma_{instantané}<-1,5m/s^2$, et
- la quatrième étape consiste à détecter l'enrayage du véhicule, par exemple $\gamma_{instantané}<-X\ m/s^2$, X étant une valeur prédéfinie pour laquelle la mesure du déplacement du véhicule ne sera plus utilisée.

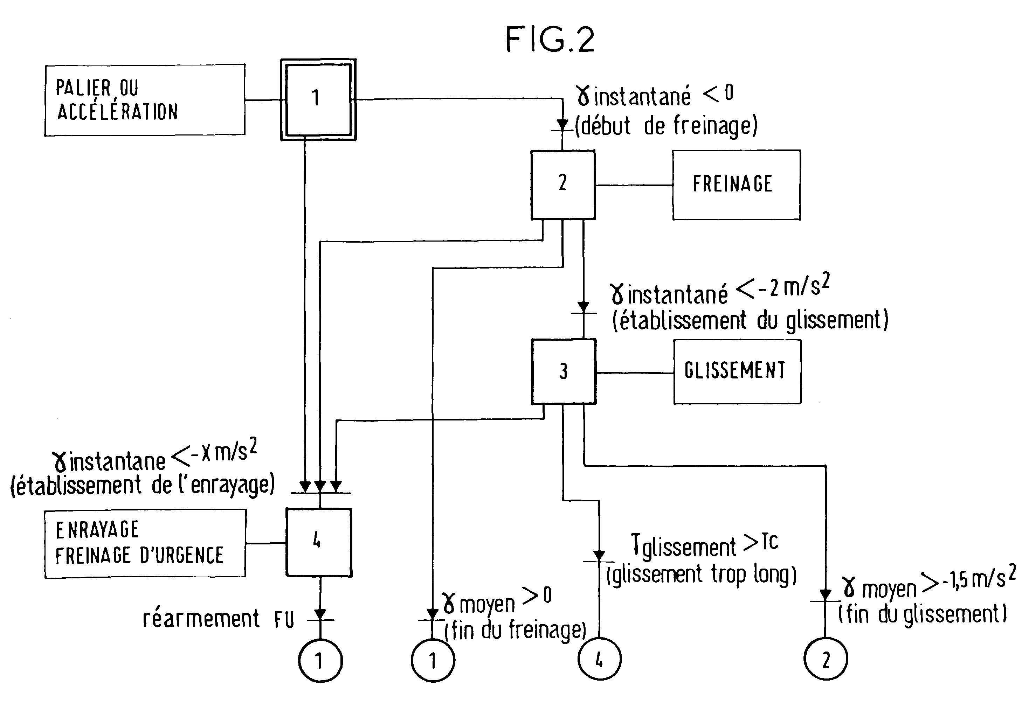

La figure 2 représente un algorithme d'un automate à états finis permettant la mise en oeuvre du procédé de protection contre l'enrayage patinage lors de la mesure du déplacement des véhicules, selon l'invention.

La figure 2 montre quatre états (1-4) de l'automate, seul un de ces états peut être actif à un moment donné.

Chaque état porte un nom, l'état des sorties et les actions réalisées sont également indiqués.

L'état noté 1 est l'état d'initialisation et est actif lors de l'activation de l'automate.

Les transitions sont notées entre deux états successifs et indiquent l'évènement impliquant le changement d'état.

**Revendications**

1. Procédé de protection contre l'enrayage patinage lors de la mesure du déplacement d'un véhicule dans lequel les changements de valeurs de l'accélération définissent les transitions d'un automate à états finis reflétant la situation des mouvements d'une roue du véhicule, caractérisé en ce qu'il comprend les étapes suivantes:

   - une première étape consiste à détecter le début du freinage du véhicule, $\gamma_{instantané}<0$,
   - une deuxième étape consiste à détecter le début du glissement du véhicule,
   - une troisième étape consiste à majorer le glissement d'une valeur forfaitaire et à contrôler que le glissement se stabilise, et
   - une quatrième étape consiste à détecter l'enrayage du véhicule pour $\gamma_{instantané}<-X\ m/s^2$, X étant une valeur prédéfinie pour laquelle la mesure du déplacement du véhicule ne sera plus utilisée.

2. Procédé selon la revendication 1, dans lequel le début du glissement du véhicule est effectif lorsque $\gamma_{instantané}<-2m/s^2$.

**3.** Procédé selon la revendication 1, dans lequel la valeur forfaitaire de la majoration du glissement est de 15%.

**4.** Procédé selon l'une quelconque des revendications 1 et 3, dans lequel le glissement est stabilisé lorsque -2m/s$^2$<$\gamma_{instantané}$<-1,5m/s$^2$.

**5.** Procédé selon selon la revendication 1, dans lequel X a pour valeur prédéfinie 5m/s$^2$.

**Patentansprüche**

**1.** Verfahren zum Schutz gegen Antriebsschleudem bzw. Schlupfhemmung während der Messung der Versetzung eines Fahrzeuges, in welchem die Veränderungen der Beschleunigungswerte die Transitionen einer Maschine mit finiten Zuständen definieren, die die Bewegungssituation eines Fahrzeugrades wiedergeben, dadurch gekennzeichnet, daß das Verfahren die Schritte umfaßt:

- ein erster Schritt besteht darin, den Anfang des Bremsens des Fahrzeuges zu bestimmen, $\gamma$ momentan < 0,
- ein zweiter Schritt besteht darin, den Anfang des Rutschens bzw. Gleitens des Fahrzeuges zu bestimmen,
- ein dritter Schritt besteht darin, das Gleiten bzw. Rutschen mit einem Pauschalwert-Zuschlag zu versehen und darin eine Steuerung in solch einer Weise vorzusehen, daß sich das Gleiten bzw. Rutschen stabilisiert,
- ein vierter Schritt besteht darin, die Hemmung bzw. Blockierung des Fahrzeuges für y momentan < X m/s$^2$ zu bestimmen, wobei X ein vorbestimmter Wert ist, für welchen die Messung der Versetzung des Fahrzeuges nicht mehr verwendet wird.

**2.** Verfahren nach Anspruch 1, in welchem der Anfang des Gleitens bzw. Rutschens des Fahrzeuges effektiv ist, wenn $\gamma$ momentan < -2 m/s$^2$.

**3.** Verfahren nach Anspruch 1, in welchem der Pauschalwert bzw. Pauschalbetrag des Zuschlages auf das Gleiten bzw. Rutschen 15 % ausmacht.

**4.** Verfahren nach einem der Ansprüche 1 und 3, in welchen das Gleiten bzw. Rutschen stabilisiert wird während gilt: -2 m/s$^2$ < $\gamma$ momentan < -1,5 m/s$^2$.

**5.** Verfahren nach Anspruch 1, in welchem X 5 m/s$^2$ als vorbestimmten Wert aufweist.

**Claims**

**1.** Method of protecting against wheel locking and slipping during measurement of the movement of a vehicle wherein changes of acceleration values define transitions of a finite state automaton reflecting the situation of the movements of a wheel of said vehicle, characterized in that it includes the following steps:

- a first step is to detect the onset of braking of said vehicle, $\gamma_{instantaneous}$ < 0,
- a second step is to detect the onset of slipping of said vehicle,
- a third step is to weight said slip by a fixed factor and to check that said slip has stabilized, and
- a fourth step is to detect locking of the wheels of said vehicle, for $\gamma_{instantaneous}$ < -X m/s$^2$, where X is a predefined value for which the measured movement of said vehicle is no longer used.

**2.** Method according to claim 1, characterized in that the onset of slipping of said vehicle is effective when $\gamma$ instantaneous < -2 m/s$^2$.

**3.** Method according to claim 1, characterized in that said slip is weighted by a fixed factor of 15%.

**4.** Method according to claim 1 or claim 3, characterized in that said slip is stabilized when -2 m/s$^2$ < $\gamma_{instantaneous}$ < -1.5 m/s$^2$.

**5.** Method according to claim 1, characterized in that X has the predefined value 5 m/s$^2$.

FIG.1

EP 0 716 001 B1

FIG.2

PALIER OU ACCÉLÉRATION

1

$\gamma$ instantané $< 0$
(début de freinage)

2 — FREINAGE

$\gamma$ instantané $< -2$ m/s$^2$
(établissement du glissement)

3 — GLISSEMENT

$\gamma$ instantane $< -X$ m/s$^2$
(établissement de l'enrayage)

ENRAYAGE FREINAGE D'URGENCE

4

réarmement FU

$\gamma$ moyen $> 0$
(fin du freinage)

T glissement $>$ Tc
(glissement trop long)

$\gamma$ moyen $> -1,5$ m/s$^2$
(fin du glissement)

①  ①  ④  ②

EP 0 716 001 B1